# EUROPEAN PATENT SPECIFICATION

(11) **EP 2 337 294 B1**
(45) Date of publication and mention of the grant of the patent: **11.07.2012**
(21) Application number: 09180084.7
(22) Date of filing: 21.12.2009
(51) Int. Cl.: H04L 27/26, H04L 27/38

(54) **IQ-imbalance estimation for non-symmetrical pilot symbols**
IQ-Ungleichgewichtseinschätzung für nicht symmetrische Pilotensymbole
Évaluation du déséquilibre de QI pour symboles de pilote non symétriques

(43) Date of publication of application: 22.06.2011
(73) Proprietor: TELEFONAKTIEBOLAGET LM ERICSSON (publ), 164 83 Stockholm (SE)
(72) Inventor: Wilhelmsson, Leif, 247 55, Dalby (SE); Park, Chester, Santa Clara, CA 95054 (US); Sundström, Lars, 224 74, Lund (SE)
(74) Representative: Åkerman, Mårten Lennart

(56) References cited:
- EP-A1- 2 109 273

## Description

### TECHNICAL FIELD

The present invention relates to a method and a receiver for down-mixing of a received signal, in a wireless communication system employing Orthogonal Frequency Division Multiplexing (OFDM), to obtain mirrored pilot symbols, henceforth referred to as pilots, in the baseband signal.

### BACKGROUND

Orthogonal Frequency Division Multiplexing (OFDM) has been adopted as the basic modulation scheme for several broadband wireless communication systems, such as the IEEE 802.16d/e Wireless Metropolitan Area Networks (WiMAX) and the Universal Mobile Telecommunications Standard Long Term Evolution (UMTS LTE).

Many of the OFDM-based wireless communication systems require that the receivers are capable of processing received OFDM signals such that a relatively high signal-to-noise ratio (SNR) is achieved. To successfully achieve such high SNR the processing must be performed without introducing severe impairments or noise. Furthermore, many of the OFDM-based systems employ complex transmission schemes, such as a Multiple-Input Multiple-Output (MIMO) scheme, which further increase the demand on the performance of the receiver. To be able to meet these strict requirements a high-cost receiver design, in terms of hardware complexity, is required and/or a low-cost receiver design capable of handling imperfections must be adopted.

A well-known imperfection in the art is imbalance between the in-phase (I) and the quadrature-phase (Q) (IQ-imbalance) components. IQ-imbalance is caused by anything that affects the I- and Q-components of the received signal in the receiver chain differently. There are several different possible sources of IQ-imbalance in a communication system. One common source is the local oscillator (LO) that ideally should generate two LO components in perfect quadrature, while another possible source is mismatch between one or more functional blocks, for instance amplifiers, mixers, channel filters, and analog-to-digital converters in the respective I- and Q-paths of the receiver chain.

In order to achieve a high SNR, while at the same time allowing for a low-cost receiver design, imperfections such as the IQ-imbalance must be compensated for in the OFDM receiver. The IQ-imbalance manifests itself such that the interference appears pair-wise between the positive frequency sub-carrier and the negative frequency sub-carrier. A way to compensate for the IQ-imbalance is to either measure or estimate the IQ-imbalance and use the result from the estimation to compensate for the IQ-imbalance on the received OFDM signal. IQ-imbalance estimation may, for example, be based on channel information and knowledge of received OFDM signal. Channel information can be obtained via channel estimation which is a well-known technique for persons skilled in the art. However, estimating the IQ-imbalance accurately requires knowledge of both the channel as well as the transmitted symbols for each frequency pair. Knowledge of the transmitted symbols is commonly obtained by the use of pilot symbols distributed on sub-carriers of each mirrored frequency pair used in the estimation.

However, the pilot symbol distribution depends on the employed communication standard. In communication standards such as the UMTS LTE the pilots are not placed on mirror frequency pairs in the transmitted signal. This is an obstacle when trying to estimate the IQ-imbalance and thus limits the possibility of a straightforward use of the approach described above.

The document EP2109273 discloses one solution to this problem in which the IQ-imbalance is estimated based on a pilot symbol, an estimated channel value for the sub-carrier frequency of the pilot symbol and information related to a corresponding mirror sub-carrier frequency associated with the pilot symbol, wherein the corresponding mirror sub-carrier frequency comprises a non-pilot symbol.

Thus, there is a need for improving the method for estimating IQ-imbalance of a received OFDM-signal. It is therefore an objective of the invention to allow for efficient IQ-imbalance estimation also in the case when the transmitted signal does not contain pilots that are placed on mirror frequency pairs and thus mitigate, alleviate, or eliminate one or more of the above-identified deficiencies in the art and disadvantages singly or in any combination.

### SUMMARY OF THE INVENTION

According to the present invention the object is achieved in a method for down-mixing a received signal in an Orthogonal Frequency Division Multiplexing (OFDM) system containing non-mirrored pilots to a baseband signal, comprising determining the down-mixing frequency based on a carrier frequency and a carrier frequency offset, wherein the carrier frequency offset is determined such that mirrored pilots are obtained in the baseband signal. Once mirrored pilots are obtained in the baseband signal well known IQ-imbalance estimation methods, based on mirrored pilot pairs, may be used to estimate the IQ-imbalance. With the above and following description in mind, it is an object of the present invention to provide a method which achieves mirrored pilots in the baseband signal even when the transmitted OFDM signal does not contain mirrored pilots.

The method may further comprise determining the carrier frequency offset in view of frequency positions of the non-mirrored pilots, and calculating the down-mixing frequency based on the carrier frequency and the carrier frequency offset.

The method may further comprise compensating the effect of the carrier frequency offset by applying a bin shift corresponding to the frequency offset in view of sub carrier spacing.

The method may further comprise compensating the effect of the carrier frequency offset by applying frequency offset compensation prior to performing frequency error estimation.

The method may further comprise performing a frequency error estimation based on the received signal, and compensating for the effect of the frequency error and the effect of the carrier frequency offset by applying frequency error compensation based on the frequency error estimation and based on the carrier frequency offset.

The method of down-mixing the received signal, such that mirrored pilots are obtained in the baseband signal, may be performed in conjunction with performing an IQ-imbalance estimation based on the received signal.

The OFDM system in the method may be one of IMT-Advanced, UMTS LTE, or WiMAX system.

The present invention also relates to an OFDM receiver unit for down-mixing of a received signal containing non-mirrored pilots to a baseband signal, comprising a determination unit adapted to determine a down-mixing frequency based on a carrier frequency and a carrier frequency offset, wherein the determination unit is adapted to determine the carrier frequency offset such that mirrored pilots are obtained in the baseband signal, and a down-mixing unit adapted to down-mixing said received signal with said down-mixing frequency.

The OFDM receiver unit may further comprise an offset determining unit, adapted to determine the carrier frequency offset in view of frequency positions of the non-mirrored pilots, and a calculating unit, adapted to calculate the down-mixing frequency based on the carrier frequency and the carrier frequency offset.

The OFDM receiver unit may further comprise a bin shift unit adapted to apply a shift corresponding to the frequency offset in view of sub carrier spacing.

The OFDM receiver unit may further comprise an offset compensation unit adapted to compensate for the effect of the carrier frequency offset prior to frequency error estimation.

The OFDM receiver unit may further comprise an error estimation unit adapted to estimate a frequency error based on the received signal, and a frequency error compensation unit adapted to compensate for the effect of the frequency error and the effect of the carrier frequency offset by applying frequency error compensation based on the frequency error estimation from said error estimation unit and based on the carrier frequency offset.

The OFDM receiver unit wherein the OFDM system may be one of an IMT-Advanced, UMTS LTE, or WiMAX system.

### BRIEF DESCRIPTION OF THE DRAWINGS

Further objects, features, and advantages of the present invention will appear from the following detailed description of some embodiments of the invention, wherein some embodiments of the invention will be described in more detail with reference to the accompanying drawings, in which:
Figure 1 shows a block diagram of an OFDM receiver in which down-mixing to obtain mirrored pilots can be performed; and
Figures 2a and 2b illustrate down-mixing of an OFDM signal with mirrored pilots; and
Figures 3a and 3b illustrate down-mixing of an OFDM signal with non-mirrored pilots; and
Figures 4a and 4b illustrate down-mixing, with a carrier frequency offset, of an OFDM signal with non-mirrored pilots; and
Figure 5 shows a flowchart of the down-mixing method for obtaining mirrored pilots in the baseband, when having an OFDM signal with non-mirrored pilots; and
Figures 6a and 6b illustrate the application of the present invention to an OFDM frame structure in a UMTS LTE system; and
Figures 7a and 7b show a flowchart and a receiver chain for compensating the error induced by the carrier frequency offset; and
Figures 8a and 8b show another flowchart and a receiver chain for compensating the error induced by the carrier frequency offset; and
Figures 9a and 9b show yet another flowchart and a receiver chain for compensating the error induced by the carrier frequency offset.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

The embodiments of the present invention will be exemplified using a general OFDM receiver that may be used in an OFDM system employing any of the standards; 1MT-Advanced, UMTS LTE, or WiMAX system. In this application the UMTS LTE standard will be used to exemplify different aspects of the invention.

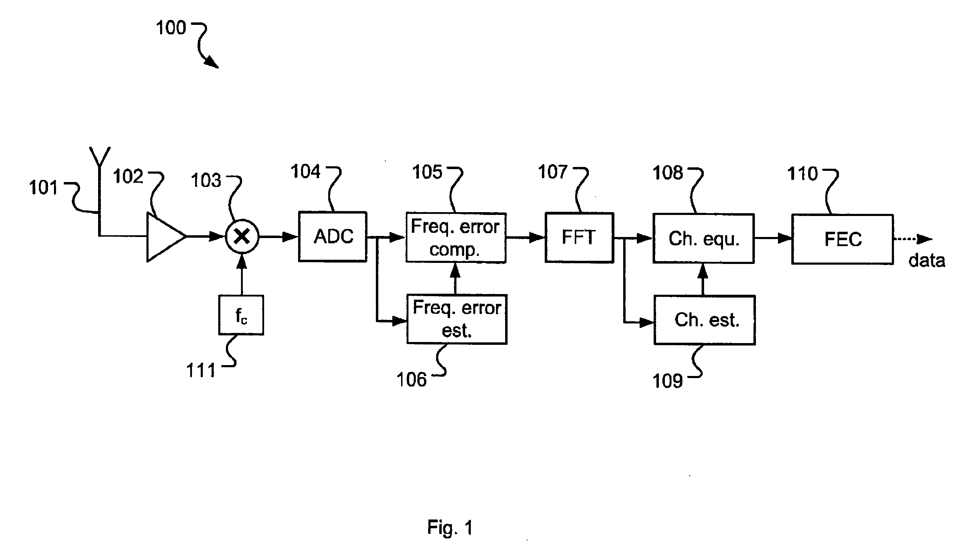

Figure 1 shows a block diagram of an OFDM receiver 100 in which embodiments of the present invention can be implemented. All the functional blocks in the OFDM receiver are well known to a person skilled in the art, and thus will only briefly, without going into any details, be discussed below. It should also be noted that some functional blocks commonly present in an OFDM receiver, such as channel filter, automatic gain control amplifier, etc., has been left out of the Figure 1 because they are not needed for the description of the invention. Also blocks in the digital domain not relevant for the description of the invention are omitted. Example of functionalities not included in Figure 1 are time synchronization and calculation of soft information used in the error correction decoding.

As shown in Figure 1, the OFDM signal received by the antenna 101 will be amplified in the amplifier 102, producing an analog radio frequency (RF) signal. The analog RF signal is down-mixed in a mixer 103, with a down-mixing frequency equal to the carrier frequency 111, into an analog baseband signal. The analog baseband signal is converted from an analog baseband signal to a digital baseband signal by an analog-to-digital converter (ADC) 104. The frequency error in the digital baseband signal is estimated, by a frequency error estimator 106, and compensated for by a frequency error compensator 105 using the result from the frequency error estimator 106. The frequency error corrected baseband signal is transformed from the time domain into the frequency domain using a fast Fourier transform 107 (FFT). The channel characteristics are estimated, by a channel estimator 109, from the frequency domain digital baseband signal, and equalized by a channel equalizer 108 using the result from the channel estimator 109. The equalized signal is then fed to a forward error correcting (FEC) decoder 110, producing a data stream for further baseband processing.

As is well-known in the art, IQ-imbalance estimation and compensation may be performed at different places in the OFDM receiver chain. In one embodiment the IQ-imbalance estimation and compensation may be performed in the time domain after the frequency error compensation 105 and before the FFT 107, while in another embodiment the IQ-imbalance estimation and compensation may be performed after the channel equalization 108 and before the FEC 110. However, in a preferred embodiment the IQ-imbalance estimation and compensation may be performed after the FFT 107 in the frequency domain and before the channel equalization 108 and channel estimation 109. As discussed in the background section a condition for using conventional IQ-imbalance estimation techniques in an OFDM-based system is the existence of a mirrored pilot pairs in the down-mixed baseband signal.

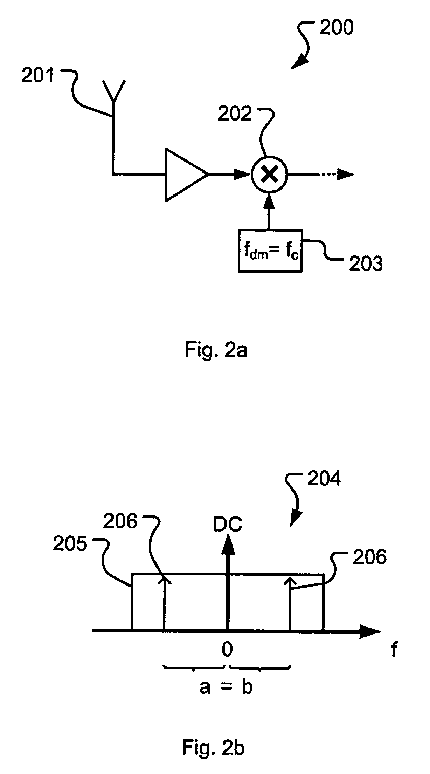

Figure 2a illustrates the principle of down-mixing 200 an OFDM signal having mirrored pilot pairs to a baseband signal. The received OFDM signal 201 is down-mixed in the mixer 202 with a down-mixing frequency equal to the carrier frequency 203 *(f_{dm}=f_{c}).* The result of the down-mixing with the carrier frequency is shown in the frequency spectrum diagram 204 in Figure 2b. The frequency spectrum diagram 204 shows that the frequency spectrum of the OFDM signal is centred on DC where *f=0,* and that the pilot signals 206, illustrated by the arrows, are symmetrically placed in relation to DC since the frequency distances a and b in the figure are equal. In a non-ideal implementation of an OFDM receiver the position of the pilots may be slightly different due to a frequency error between the carrier frequency and the received OFDM signal. Having mirrored (symmetrical) pilots in the down-mixed baseband signal, as illustrated in Figure 2b, is a prerequisite if well-known and efficient techniques for IQ-imbalance are going to be used.

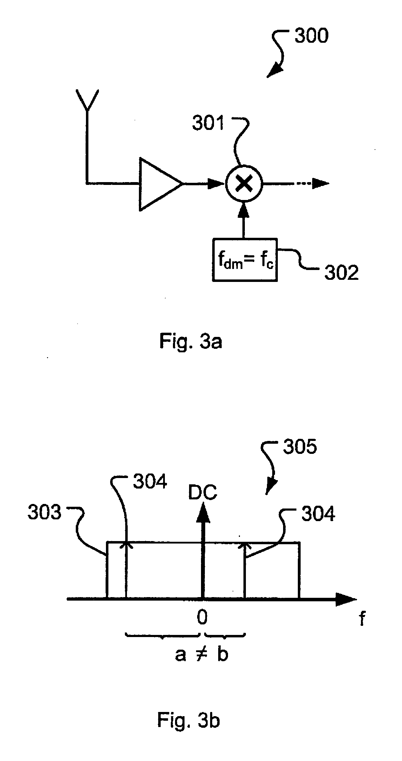

However, as mentioned in the background section, in some communication standards like the UMTS LTE the pilots are not placed on symmetrical mirror frequency pairs, thereby limiting the straight-forward use of well known IQ-imbalance estimation techniques. Figure 3a illustrates the effect of down-mixing 300 an OFDM signal having non-mirrored pilots to a baseband signal. In the same manner as in Figure 2a the received OFDM signal is down-mixed in the mixer 301 with a down-mixing frequency equal to the carrier frequency 302 *(f_{dm}=f_{c}).* However, the result of the down-mixing with the carrier frequency differs from the result shown in conjunction with Figure 2b. From the frequency spectrum diagram 305 in Figure 3b it can clearly be seen that the frequency spectrum 303 of the OFDM signal having non-mirrored pilots is still centred on DC where *f=0,* but the pilots 304 are asymmetrically placed in relation to DC, as is illustrated by that the frequency distances a and b in the figure are not equal.

A method according to the present invention makes it possible to employ well-known IQ-imbalance estimation techniques on an OFDM system signal, even though it has non-mirrored pilots. The method is based on down-mixing the received signal, in an OFDM system containing asymmetric non-mirrored pilots, to a baseband signal by determining a down-mixing frequency such that mirrored pilots are obtained in the baseband signal. The down-mixing frequency is based on the carrier frequency and a carrier frequency offset, where the carrier frequency offset is determined such that mirrored pilots are achieved.

It should be noted that the carrier frequency offset discussed in this application is not the same as the frequency error which is a consequence of a mismatch between the carrier frequency and the received signal.

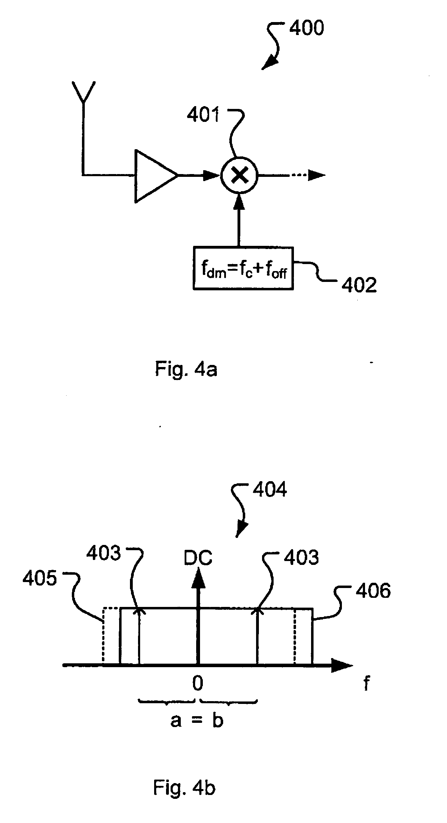

Figure 4a illustrates the effect of down-mixing 400 an OFDM signal having non-mirrored pilot pairs with an adjusted down-mixing frequency according to the present invention. In this case the received OFDM signal is down-mixed in the mixer 401 with a down-mixing frequency equal to the carrier frequency 402 adjusted with a carrier frequency offset *(f_{dm}=f_{c}+f_{off})* determined from the received OFDM signal such that mirrored pilots are achieved. The result of the down-mixing is shown in the frequency spectrum diagram 404 in Figure 4b. From the frequency spectrum diagram 404 it can be seen that mirrored pilots have been achieved, illustrated by the equal distances between a and *b,* by adjusting the carrier frequency by a carrier frequency offset. An effect of adjusting the down-mixing frequency in this way is that the frequency spectrum 405 of the OFDM signal will be offset 406, and thus no longer will be centred on DC. The offset spectrum 406 in relation to the DC will result in a minor mismatch in the receiver since the channel selective filter (not shown in the figure) is matched to a frequency spectrum centred on DC 405. However, in most cases the mismatch will be less than half the distance between the pilots, which in turn typically only will be in the order of a percent of the total bandwidth of the signal. The offset of spectrum 406 compared to the spectrum 405 will hereinafter be referred to as the frequency spectrum offset.

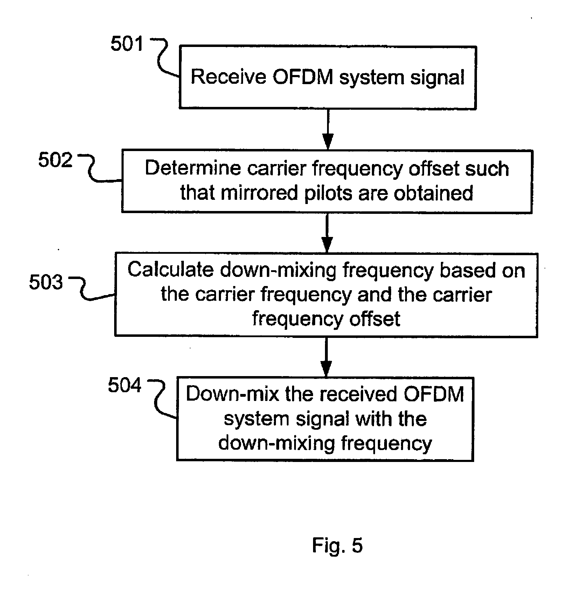

The basic steps of the method, according to an embodiment of the present invention, for down-mixing an OFDM system to obtain mirrored pilot pairs are shown in the flowchart in Figure 5. The method comprises the steps of receiving an OFDM system signal 501, determining the size of a carrier frequency offset such that mirrored pilots can be obtained, calculating a down-mixing frequency based on the carrier frequency and the determined carrier frequency offset, applying the calculated down-mixing frequency in the mixer to down-mix the received OFDM system signal.

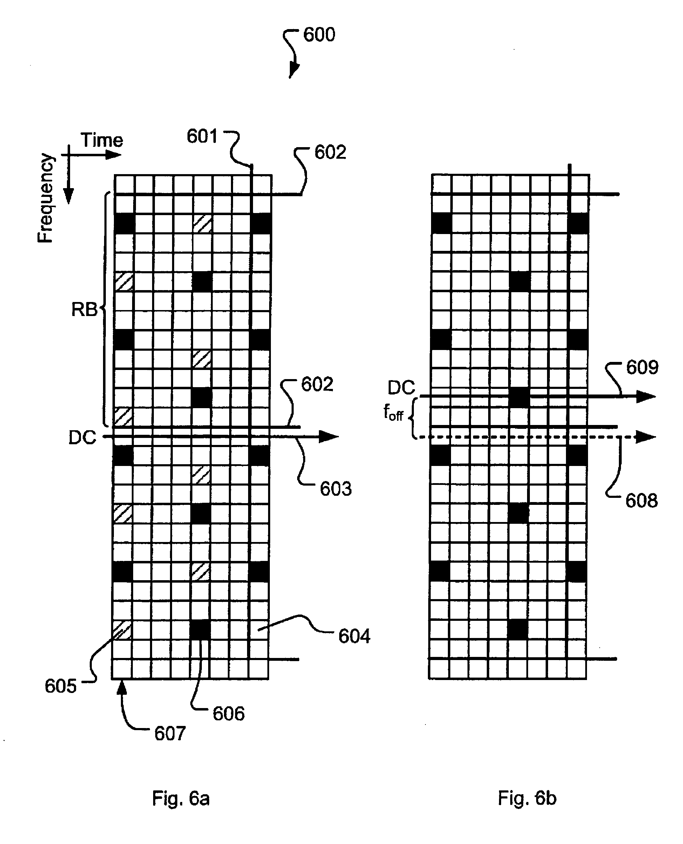

Figures 6a and 6b show, using an OFDM frame, an example of how the down-mixing method can be applied to an OFDM signal 600 in a system employing the UMTS LTE standard. The figure illustrates the distribution of sub-carriers of the OFDM signal in time (x-axis) and frequency (y-axis). Each cell (or square) represents a sub-carrier of one OFDM symbol, wherein the dark cells 606 correspond to pilots, the gray cells 605 correspond to a location where mirrored pilots would have been located, and the white cells 604 correspond to data symbols. The DC where f=0 is indicated by an emphasized arrow 603. Each column of cells 607 represents an OFDM symbol, and the group of sub-carriers between the emphasised horizontal lines 602 and the emphasized vertical line 601 indicate a resource block (RB). In our example the RB corresponds to 12 sub-carriers in frequency and 7 OFDM symbols in time.

The pilots, in the example shown in Figure 6a, are located at a distance corresponding to an even number of sub-carriers, which in this case is equal to 6 sub-carriers. The sub-carrier spacing is 15 kHz which means that within the first OFDM symbol 607 one pilot is transmitted at 15 kHz, and the pilot being the closest candidate to become a mirror pilot is transmitted at 5 *(-15) = -75 kHz, thus no pair of mirrored pilots exists. To obtain mirrored pilots, the down-mixing frequency is adjusted by the carrier frequency offset. In this example, the carrier frequency offset would be set to -30 kHz, which corresponds to twice the sub-carrier spacing. When the down-mixing is applied, using the determined down-mixing frequency, the result will be a frequency shift as illustrated in the OFDM frame shown in Figure 6b. In Figure 6b no grey cells are shown, while all pilots (the black boxes) are showing that mirrored pairs of pilots have been achieved in relation to the DC 609. The carrier frequency offset shift corresponding to two sub-carriers (equal to -30 kHz) is illustrated by the spacing between the dashed arrow 608 symbolising the position of the DC after the down-mixing when using the down-mixing frequency without the carrier frequency offset, and the DC arrow 609 corresponding to the DC position after the down-mixing when using the down-mixing frequency with the carrier frequency offset. Thus, by applying down-mixing with a carrier frequency offset, mirrored pilots can be achieved even though a communication standard having non-mirrored pilots is used.

When the pilots are located at a distance corresponding to an even number of sub-carriers, as in the example in Figure 6a and 6b, a carrier frequency offset corresponding to an integer multiple *n* times the sub-carrier spacing must be applied to achieve mirrored pair of pilots. However, this will cause the frequency spectrum to be shifted (as discussed in conjunction with Figures 4a and 4b) resulting in a frequency spectrum offset. When the down-mixed signal, having a frequency spectrum offset, is applied in a FFT the effect will be that the different symbols (sub-carriers) within an OFDM symbol will show up shifted n bins.

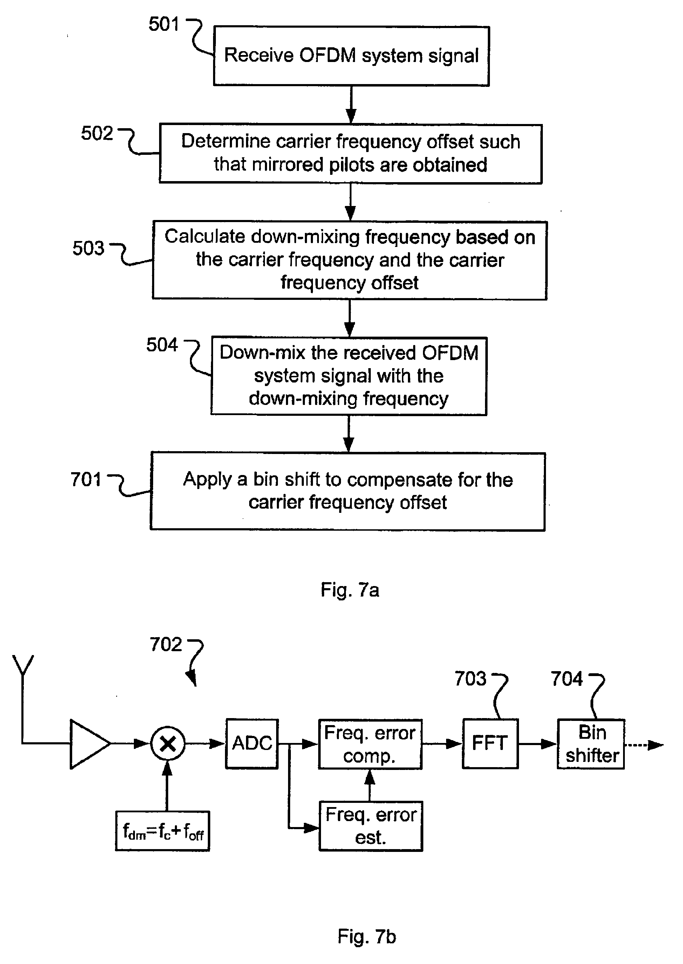

In an embodiment of the present invention this may be compensated for by applying a bin shift 701 in the method described in conjunction with Figure 5 as shown in Figure 7a. A bin shifter 704 which re-shifts the bins coming from the FFT 703 may be applied after the FFT 703, in the receiver chain 702 as shown in Figure 7b. In practice since n is known the bin shift would result in a re-indexing of the bins after the FFT 703, which is a trivial operation.

In another example the pilots may be located at a distance corresponding to an odd number of sub-carriers. This implies that in order to obtain pilots that are mirrored in the baseband, the frequency offset must be half the sub-carrier spacing plus an integer number times the sub-carrier spacing. Consequently, the frequency spectrum offset is also a half sub-carrier spacing plus an integer number times the sub-carrier spacing which, when applied to the FFT 703, will result in what is known in the art as leakage. Since frequency error estimation and compensation is performed prior to the FFT 703, the frequency spectrum offset will be captured when the estimation and compensation is performed.

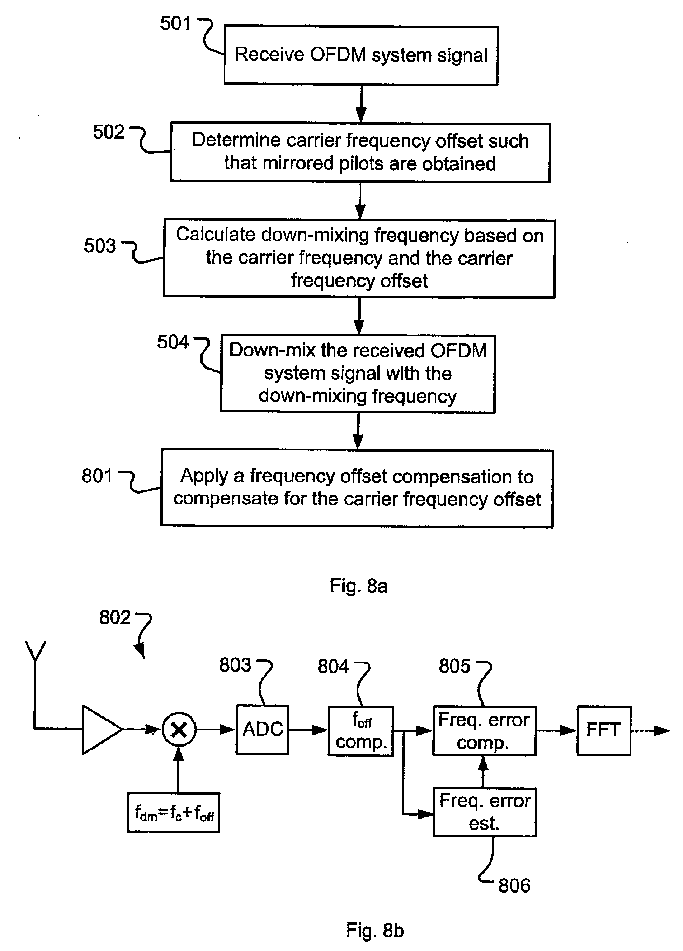

The algorithm for frequency estimation may at some point be in a tracking mode where it is assumed that the remaining frequency error is relatively small. Alternatively, the frequency error estimation algorithm might be based on cross-correlation with a known sequence, in which case coherent accumulation is performed over a certain time. In this case, the frequency spectrum offset could have adverse effects on the frequency error estimation and correction. One way of solving this would be to remove the frequency spectrum offset prior to the frequency error estimation and compensation as described in conjunction with Figures 8a and 8b.

In an embodiment of the present invention the frequency spectrum offset introduced by the method described in conjunction with Figure 5 may be compensated for by applying a frequency offset compensation 801 as shown in Figure 8a. The frequency offset compensation 804 may be applied after the ADC 803 and before the frequency error estimation 806 and compensation 805 in the receiver chain 802 as shown in Figure 8b. In this way the whole or a fractional part, corresponding to half a sub-carrier, of the frequency spectrum offset may be compensated for. The compensation for the frequency spectrum offset is trivial since the information regarding the size of the frequency spectrum offset is known. Algorithms for performing these kinds of corrections are well known in the art, and will therefore not be discussed in detail.

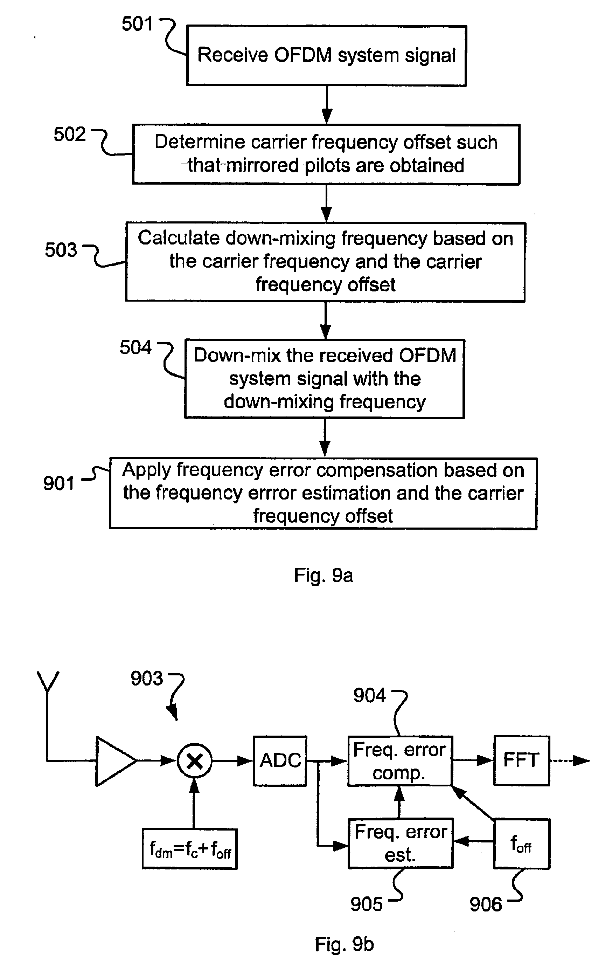

In yet another embodiment of the present invention the frequency spectrum offset introduced by the method described in conjunction with Figure 5 may be compensated for by applying frequency error compensation 901 based on the frequency error estimation and the carrier frequency offset, as shown in Figure 9a. In this embodiment the carrier frequency offset information 906 is supplied to the frequency error estimation 905 and/or to the frequency error compensation 904, and in this way the frequency spectrum offset induced by the down-mixing can be taken care of while compensating for the frequency error 904.

In an embodiment of the present invention, the carrier frequency offset applied in the down-mixing may be changed during the reception of the OFDM signal. The carrier frequency offset is applied as long as the IQ-imbalance is estimated but when the IQ-imbalance has been estimated the down-mixing is used without the carrier frequency offset. It can be envisioned that the IQ-imbalance is of a rather static nature, which means that it only needs to be estimated initially, and possible re-estimated relatively seldom. A situation when this embodiment is particularly useful is when a significant DC-component is generated in the down-mixing process, which is a common problem when the receiver is based on direct conversion (also referred to as a homodyne or a zero-IF receiver) and a carrier frequency offset equals half a sub-carrier spacing plus an integer number of sub-carrier spacing. In this case the DC component might, due to leakage in the FFT, cause significant inter-carrier interference (ICI) to the sub-carriers closest to the DC sub-carrier. Therefore, applying the carrier frequency offset to perform the IQ-imbalance estimation, and once the estimation is done, remove the carrier frequency offset in order to reduce the negative effect of DC leakage is a preferred approach.

In an embodiment of the present invention, the reception of the OFDM signal is initially performed without any carrier frequency offset. When the positions of the pilots have been determined a suitable carrier frequency offset is determined and applied to the down-mixing according to previous embodiments.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. A method for down-mixing a received signal in an Orthogonal Frequency Division Multiplexing (OFDM) system containing non-mirrored pilots to a baseband signal, comprising:
- determining the down-mixing frequency based on a carrier frequency and a carrier frequency offset, wherein the carrier frequency offset is determined such that mirrored pilots are obtained in the baseband signal.

2. The method according to claim 1, wherein the determining of the down-mixing frequency comprises:
- determining the carrier frequency offset in view of frequency positions of the non-mirrored pilots; and
- calculating the down-mixing frequency based on the carrier frequency and the carrier frequency offset.

3. The method according to any of the claims 1-2, further comprise:
- compensating the effect of the carrier frequency offset by applying a bin shift corresponding to the frequency offset in view of sub carrier spacing.

4. The method according to any of the claims 1-2, further comprise:
- compensating the effect of the carrier frequency offset by applying a frequency offset compensation prior to performing frequency error estimation.

5. The method according to any of the claims 1-2, further comprise:
- performing a frequency error estimation based on the received signal; and
- compensating for the effect of the frequency error and the effect of the carrier frequency offset by applying frequency error compensation based on the frequency error estimation and based on the carrier frequency offset.

6. The method according to any of the claims 1-5, wherein the down-mixing of the received signal, such that mirrored pilots are obtained in the baseband signal, is performed in conjunction with performing an IQ-imbalance estimation based on the received signal.

7. The method according to claim 1, wherein the OFDM system is one of IMT-Advanced, UMTS LTE, or WiMAX system.

8. A Orthogonal Frequency Division Multiplexing (OFDM) receiver unit for down-mixing of a received signal containing non-mirrored pilots to a baseband signal, comprising;
- a determination unit adapted to determine a down-mixing frequency based on a carrier frequency and a carrier frequency offset, wherein the determination unit is adapted to determine the carrier frequency offset such that mirrored pilots are obtained in the baseband signal; and
- a down-mixing unit adapted to down-mixing said received signal with said down-mixing frequency.

9. The OFDM receiver unit according to claim 8, wherein the determination unit comprises;
- an offset determining unit, adapted to determine the carrier frequency offset in view of frequency positions of the non-mirrored pilots; and
- a calculating unit, adapted to calculate the down-mixing frequency based on the carrier frequency and the carrier frequency offset.

10. The OFDM receiver unit according to any of the claims 8-9, further comprises;
- a bin shift unit adapted to apply a bin shift corresponding to the frequency offset in view of sub carrier spacing.

11. The OFDM receiver unit according to any of the claims 8-9, further comprises;
- an offset compensation unit adapted to compensate for the effect of the carrier frequency offset prior to frequency error estimation.

12. The OFDM receiver unit according to any of the claims 8-9, further comprises;
- an error estimation unit adapted to estimate a frequency error based on the received signal; and
- a frequency error compensation unit adapted to compensate for the effect of the frequency error and the effect of the carrier frequency offset by applying frequency error compensation based on the frequency error estimation from said error estimation unit and based on the carrier frequency offset.

13. The OFDM receiver unit according to claim 8, wherein the OFDM system is one of an IMT-Advanced, UMTS LTE, or WiMAX system.

## Patentansprüche

1. Verfahren zum Abwärtsmischen eines Empfangssignals in einem orthogonalen Frequenzmultiplex (OFDM)-System, das nichtgespiegelte Piloten enthält, auf ein Basisbandsignal, umfassend:
- Bestimmen der Abwärtsmischfrequenz basierend auf einer Trägerfrequenz und einem Trägerfrequenzversatz, wobei der Trägerfrequenzversatz derart bestimmt wird, dass gespiegelte Piloten im Basisbandsignal erhalten werden.

2. Verfahren nach Anspruch 1, wobei das Bestimmen der Abwärtsmischfrequenz umfasst:
- Bestimmen des Trägerfrequenzversatzes im Hinblick auf Frequenzpositionen der nicht gespiegelten Piloten; und
- Berechnen der Abwärtsmischfrequenz basierend auf der Trägerfrequenz und dem Trägerfrequenzversatz.

3. Verfahren nach einem der Ansprüche 1 bis 2, ferner umfassend:
- Ausgleichen der Wirkung des Trägerfrequenzversatzes durch Anwenden einer Bin-Verschiebung, die dem Frequenzversatz im Hinblick auf den Zwischenträgerabstand entspricht.

4. Verfahren nach einem der Ansprüche 1 bis 2, ferner umfassend:
- Ausgleichen der Wirkung des Trägerfrequenzversatzes durch Anwenden eines Frequenzversatzausgleichs vor dem Durchführen einer Frequenzfehlerschätzung.

5. Verfahren nach einem der Ansprüche 1 bis 2, ferner umfassend:
- Durchführen einer Frequenzfehlerschätzung basierend auf dem Empfangssignal; und
- Ausgleichen der Wirkung des Frequenzfehlers und der Wirkung des Trägerfrequenzversatzes durch Anwenden eines Frequenzfehlerausgleichs basierend auf der Frequenzfehlerschätzung und basierend auf dem Trägerfrequenzversatz.

6. Verfahren nach einem der Ansprüche 1 bis 5, wobei das Abwärtsmischen des Empfangssignals, derart das gespiegelte Piloten im Basissignal enthalten werden, in Verbindung mit dem Durchführen einer IQ-Ungleichgewichtseinschätzung basierend auf dem Eingangssignal durchgeführt wird.

7. Verfahren nach Anspruch 1, wobei das OFDM-System eines von einem IMT-Advanced-, UMTS-LTE- oder WiMAX-System ist.

8. Orthogonale Frequenzmultiplex (OFDM)-Empfängereinheit zum Abwärtsmischen eines Empfangssignals, das nichtgespiegelte Piloten enthält, auf ein Basisbandsignal, umfassend:
- eine Bestimmungseinheit, die so ausgelegt ist, dass sie eine Abwärtsmischfrequenz basierend auf einer Trägerfrequenz und einem Trägerfrequenzversatz bestimmt, wobei die Bestimmungseinheit so ausgelegt ist, dass sie den Trägerfrequenzversatz derart bestimmt, dass gespiegelte Piloten im Basisbandsignal erhalten werden; und
- eine Abwärtsmischeinheit, die so ausgelegt ist, dass sie das Empfangssignal mit der Abwärtsmischfrequenz abwärtsmischt.

9. OFDM-Empfängereinheit nach Anspruch 8, wobei die Bestimmungseinheit umfasst:
- eine Versatzbestimmungseinheit, die so ausgelegt ist, dass sie den Trägerfrequenzversatz im Hinblick auf Frequenzpositionen der nichtgespiegelten Piloten bestimmt; und
- eine Recheneinheit, die so ausgelegt ist, dass sie die Abwärtsmischfrequenz basierend auf der Trägerfrequenz und dem Trägerfrequenzversatz berechnet.

10. OFDM-Empfänger nach einem der Ansprüche 8 bis 9, ferner umfassend:
- ein Bin-Verschiebungseinheit, die so ausgelegt ist, dass sie eine Bin-Verschiebung anwendet, die dem Frequenzversatz im Hinblick auf den Zwischenträgerabstand entspricht.

11. OFDM-Empfängereinheit nach einem der Ansprüche 8 bis 9, ferner umfassend:
- eine Versatzausgleichseinheit, die so ausgelegt ist, dass sie die Wirkung des Trägerfrequenzversatzes vor der Frequenzfehlerschätzung ausgleicht.

12. OFDM-Empfängereinheit nach einem der Ansprüche 8 bis 9, ferner umfassend:
- eine Fehlerschätzeinheit, die so ausgelegt ist, dass sie einen Frequenzfehler basierend auf dem Empfangssignal schätzt; und
- eine Frequenzfehlerausgleichseinheit, die so ausgelegt ist, dass sie die Wirkung des Frequenzfehlers und der Wirkung des Trägerfrequenzversatzes durch Anwenden eines Frequenzfehlerausgleichs basierend auf der Frequenzfehlerschätzung von der Fehlerschätzeinheit und basierend auf dem Trägerfrequenzversatz ausgleicht.

13. OFDM-Empfängereinheit nach Anspruch 8, wobei das OFDM-System eines von einem IMT-Advanced-, UMTS-LTE- oder WiMAX-System ist.

## Revendications

1. Procédé de mixage démultiplicateur d'un signal reçu dans un système de multiplexage par répartition orthogonale de fréquence (OFDM) contenant des signaux pilotes n'étant pas en miroir par rapport à un signal de bande de base, comprenant de :
- déterminer la fréquence de mixage démultiplicateur sur la base d'une fréquence porteuse et d'un décalage de fréquence porteuse, dans lequel le décalage de fréquence porteuse est déterminé de telle sorte que les signaux pilotes en miroir sont obtenus dans le signal de bande de base.

2. Procédé selon la revendication 1, dans lequel la détermination de la fréquence de mixage démultiplicateur comprend de :
- déterminer le décalage de fréquence porteuse compte tenu des positions de fréquence des signaux pilotes n'étant pas en miroir ; et
- calculer la fréquence de mixage démultiplicateur sur la base de la fréquence porteuse et du décalage de fréquence porteuse.

3. Procédé selon une quelconque des revendications 1 à 2, comprenant en outre de :
- compenser l'effet du décalage de fréquence porteuse en appliquant un déplacement de segment correspondant au décalage de fréquence compte tenu de l'espacement de sous-porteuse.

4. Procédé selon une quelconque des revendications 1 à 2, comprenant en outre de :
- compenser l'effet du décalage de fréquence porteuse en appliquant une compensation de décalage de fréquence avant d'effectuer une estimation d'erreur de fréquence.

5. Procédé selon une quelconque des revendications 1 à 2, comprenant en outre de :
- effectuer une estimation d'erreur de fréquence sur la base du signal reçu ; et
- compenser l'effet de l'erreur de fréquence et l'effet du décalage de fréquence porteuse en appliquant une compensation d'erreur de fréquencesur la base de l'estimation d'erreur de fréquence et sur la base du décalage de fréquence porteuse.

6. Procédé selon une quelconque des revendications 1 à 5, dans lequel le mixage démultiplicateur du signal reçu, de sorte que les signaux pilotes en miroir soient obtenus dans le signal de bande de base, est effectué en liaison avec l'exécution d'une estimation de déséquilibre IQ sur la base du signal reçu.

7. Procédé selon la revendication 1, dans lequel le système OFDM est un d'un système IMT avancé, UMTS LTE ou WiMAX.

8. Unité de récepteur de multiplexage par répartition orthogonale de fréquence (OFDM) en vue du mixage démultiplicateur d'un signal reçu contenant des signaux pilotes n'étant pas en miroir par rapport à un signal de bande de base, comprenant :
- une unité de détermination adaptée pour déterminer une fréquence de mixage démultiplicateur sur la base d'une fréquence porteuse et d'un décalage de fréquence porteuse, dans laquelle l'unité de détermination est adaptée pour déterminer le décalage de fréquence porteuse de telle sorte que les signaux pilotes en miroir soient obtenus dans le signal de bande de base ; et
- une unité de mixage démultiplicateur adaptée afin d'effectuer un mixage démultiplicateur dudit signal reçu avec ladite fréquence de mixage démultiplicateur.

9. Unité de récepteur OFDM selon la revendication 8, dans laquelle l'unité de détermination comprend :
- une unité de détermination de décalage, adaptée afin de déterminer le décalage de fréquence porteuse compte tenu des positions de fréquence des signaux pilotes n'étant pas en miroir ; et
- une unité de calcul, adaptée afin de calculer la fréquence de mixage démultiplicateur sur la base de la fréquence porteuse et du décalage de fréquence porteuse.

10. Unité de récepteur OFDM selon une quelconque des revendications 8 à 9, comprenant en outre :
- une unité de déplacement de segment adaptée afin d'appliquer un déplacement de segment correspondant au décalage de fréquence compte tenu de l'espacement de sous-porteuse.

11. Unité de récepteur OFDM selon une quelconque des revendications 8 à 9, comprenant en outre :
- une unité de compensation de décalage adaptée afin de compenser l'effet du décalage de fréquence porteuse avant l'estimation d'erreur de fréquence.

12. Unité de récepteur OFDM selon une quelconque des revendications 8 à 9, comprenant en outre :
- une unité d'estimation d'erreur adaptée afin d'estimer une erreur de fréquence sur la base du signal reçu ; et
- une unité de compensation d'erreur de fréquence adaptée afin de compenser l'effet de l'erreur de fréquence et l'effet du décalage de fréquence porteuse en appliquant une compensation d'erreur de fréquence sur la base de l'estimation d'erreur de fréquence provenant de ladite unité d'estimation d'erreur et sur la base du décalage de fréquence porteuse.

13. Unité de récepteur OFDM selon la revendication 8, dans laquelle le système OFDM est un d'un système IMT avancé, UMTS LTE ou WiMAX.
